# EUROPÄISCHE PATENTANMELDUNG

(11) **EP 1 857 690 A2**
(43) Veröffentlichungstag der Anmeldung: **21.11.2007**
(21) Anmeldenummer: 07008168.2
(22) Anmeldetag: 21.04.2007
(51) Int. Cl.: F16B 19/10, B60J 10/02

(54) **Verbindungselement für Bauteile eines Kraftfahrzeugs**

(30) Priorität: 19.05.2006 DE 102006023548
(71) Anmelder: GM Global Technology Operations, Inc., Detroit, MI 48265-3000 (US)
(72) Erfinder: Alhof, Michael, 65439 Flörsheim (DE); Priess, Klaus-Albert, 55129 Mainz (DE)
(74) Vertreter: Spitzfaden, Ralf

(57) **Zusammenfassung**

Verbindungselement für Bauteile VD, WD eines Kraftfahrzeugs, umfassend einen rohrförmigen Niet 100, mit einem Nietkopf 110 und einem Schaft 120, wobei der Schaft wenigstens zwei längsseitige Schlitze aufweist, zwischen denen elastisch rückfedernd auslenkbare Zungen 112A, 112B gebildet sind, und umfassend ein Gegenlager 200 mit einer rohrförmigen Aufnahme 210, in die der Schaft des Niets zum Halten wenigstens eines Bauteils VD zwischen Nietkopf und Gegenlager einführbar ist, wobei an dem Außenumfang des Schafts und an dem Innenumfang der Aufnahme einander zugeordnete Rastelemente ausgebildet sind, die in einer Befestigungslage FP des Niets in der Aufnahme in Eingriff gebracht werden, so dass der Niet gegen ein Herausrutschen aus der Aufnahme gehalten ist, und umfassend einen Bolzen 300, der in den rohrförmigen Niet einführbar ist, und der in einer Sicherungslage PS in dem Niet 100 eine Auslenkung der Zungen blockiert, so dass ein Ausrücken der Rastelemente verhindert wird.

## Beschreibung

Die Erfindung betrifft das technische Gebiet der Befestigungstechnik und insbesondere ein Verbindungselement für Bauteile eines Kraftfahrzeugs nach Anspruch 1, ein Verfahren zum Verbinden der Bauteile mit einem solchen Element und eine bevorzugte Verwendung desselben.

Aus dem Stand der Technik sind unterschiedlichste Verbindungselemente für Bauteile eines Fahrzeugs bekannt, zB Schrauben, Nieten, Klammern, Klipse, Haken usw. Diese Verbindungselemente erfordern aber stets einen ausreichenden bemessenen Bauraum, der sowohl ihre Montage als auch ihre Unterbringung bzw Anbringung erlaubt. Dieser Bauraum ist im Fahrzeugbau stets dort begrenzt, wo eine Außenform definierten Stylinganforderungen genügen soll.

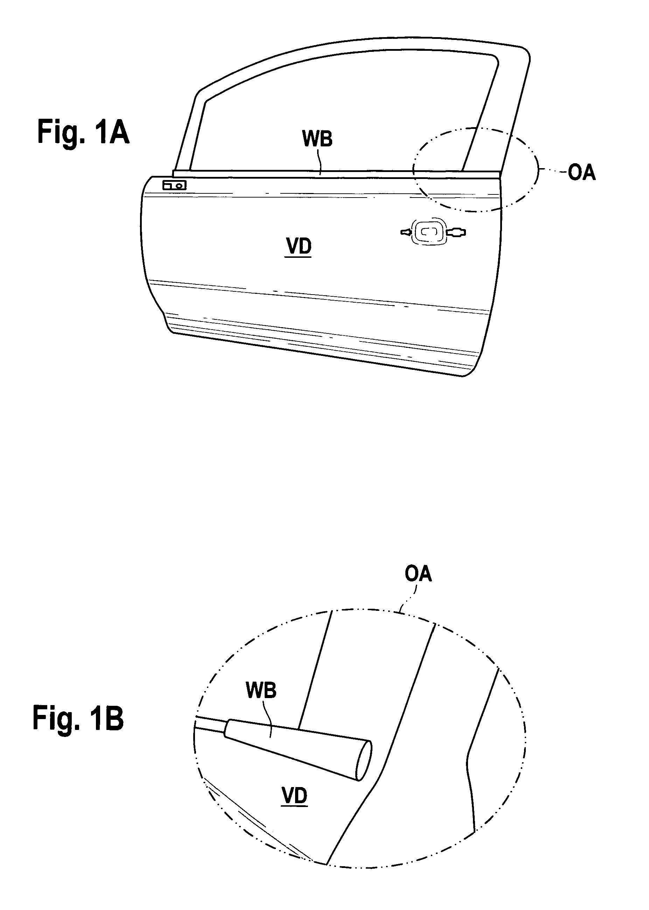

Die hier beigefügten Figuren 1A und 1B verdeutlichen diese Problematik anhand einer Fensterschachtleiste WB (waist belt), die außen und längsseits einer Fahrzeugtür VD (vehicle door) verläuft. Aus Stylinggründen wurde dabei gefordert, dass die Leiste auch den Bereich OA (overlap area) übergreift. Zur Befestigung der Leiste wurde eine Klammerbefestigung vorgesehen, die jedoch im Übergriffsbereich OA nicht einsetzbar war, da der dortige Bauraum durch eine nach Außendrehung des Türrahmens verringert wurde. Die ersten Integrationsfahrzeuge zeigten deshalb einen ungenügenden Festsitz in dem Bereich OA, wie aus Figur 1B zu erkennen ist.

Es ist Aufgabe der vorliegenden Erfindung, ein konstruktiv einfach aufgebautes und effizientes, sowie zuverlässiges und kostengünstiges Verbindungselement bereitzustellen, das auch unter engen Platzverhältnissen eingesetzt werden kann.

Diese Aufgabe wird durch ein Verbindungselement für Bauteile eines Kraftfahrzeugs gelöst, das einen rohrförmigen Niet umfasst, mit einem Nietkopf und einem Schaft, wobei der Schaft wenigstens zwei längsseitige Schlitze aufweist, zwischen denen elastisch rückfedernd auslenkbare Zungen gebildet sind, und das ein Gegenlager mit einer rohrförmigen Aufnahme umfasst, in die der Schaft des Niets zum Halten wenigstens eines Bauteils zwischen Nietkopf und Gegenlager einführbar ist, wobei an dem Außenumfang des Schafts und an dem Innenumfang der Aufnahme einander zugeordnete Rastelemente ausgebildet sind, die in einer Befestigungslage des Niets in der Aufnahme in Eingriff gebracht werden, so dass der Niet gegen ein Herausrutschen aus der Aufnahme gehalten ist, und umfassend einen Bolzen, der in den rohrförmigen Niet einführbar ist, und der in einer Sicherungslage in dem Niet eine Auslenkung der Zungen blockiert, so dass ein Ausrücken der Rastelemente verhindert wird.

Ein wesentlicher Punkt der Erfindung besteht zunächst darin, dass die gewünschte Verbindung durch einfaches Einklipsen des spreizdübelartig aufgebauten Niets in die Aufnahme des Gegenlagers hergestellt wird. Dadurch lässt sich das Verbindungselement im Vergleich zB zu einer Verschraubung zeitoptimiert montieren. Da das Einklipsen des Niets zudem keine Werkzeuge erfordert, lässt sich die Verbindung insbesondere auch in sehr kleinen Bauräumen realisieren. Eine konstruktive Änderung des gehaltenen Bauteils selbst, die über eine schlichte Durchgangsöffnung bzw -bohrung hinausgeht, ist überflüssig. Die Produktkosten der Verbindung werden dadurch um ungefähr 40 % gesenkt.

Ein weiterer wesentlicher Punkt der Erfindung besteht darin, dass die Verbindung - obwohl einfach herzustellen - durch den vorgesehenen Sicherungsbolzen auch besonders zuverlässig ist. Diese Sicherung beansprucht keinen weiteren Bauraum, da der Bolzen - ähnlich wie der Niet selbst - per Hand montiert werden kann und in der Sicherungslage in dem Niet aufgenommen ist.

Bevorzugte Weiterbildungen des Verbindungselements sind in den Ansprüchen 2 bis 19 angegeben. Im folgenden wird insbesondere auf vorteilhafte Ausgestaltungen von Niet und Aufnahme eingegangen.

Danach ist in einer ersten vorteilhaften Ausführungsform des Verbindungselements vorgesehen, dass die Rastelemente wenigstens einen Vorsprung umfassen, der umlaufend am Außenumfang des Nietschafts oder am Innenumfang der Aufnahme ausgebildet ist, und wenigstens einen zugehörigen Vorsprung oder eine zugehörige Ausnehmung umfassen, der oder die am jeweils gegenüberliegenden Umfang gleichartig umlaufend ausgebildet ist, wobei in der Befestigungslage des Niets ein jeweiliger Vorsprung gegen einen gegenüberliegenden Vorsprung anliegt oder in eine gegenüberliegende Ausnehmung eingreift. Derartige Rastelemente zwischen Nietschaft und Aufnahme lassen sich fertigungstechnisch besonders einfach, zB jeweils in Form eines Kunststoffspritzteils realisieren. Werden zudem mehrere Vorsprünge/Ausnehmungen entlang der Längsachse des Nietschafts vorgesehen, die mit jeweils zugeordneten Vorsprüngen/Ausnehmungen der Aufnahme in Eingriff gebracht werden können, lässt sich die Einklipstiefe des Niets in der Aufnahme des Gegenlagers auf unterschiedliche Bauteiltiefen anpassen. Dies macht die Verbindung insgesamt sehr variabel einsetzbar.

Grundsätzlich müssen die Vorsprünge und Ausnehmungen zwar keine Rundungen oder Einführschrägen aufweisen, solange diese so bemessen und aufeinander abgestimmt sind, dass ein elastisches Auslenken und Rückfedern der Zungen des Niets zum Herstellen der Rastverbindung gewährleistet ist. Eine besonders einfache Montage des Verbindungselements wird aber dadurch erreicht, dass wenigstens eine der beiden seitlichen Flanken der am Innenumfang der Aufnahme gebildeten Vorsprünge oder Ausnehmungen trichterförmig, und der am Außenumfang des Nietschafts gebildeten Vorsprünge oder Ausnehmungen pfeilspitzenförmig zuläuft. Dadurch wird ein verhakungsfreies Einstecken des Niets in die Aufnahme möglich, das keine gesteigerten Ansprüche an Passtoleranzen der einzelnen Teile erfordert und somit eine kostengünstige Herstellung des Verbindungselements ermöglicht. Aus den gleichen Gründen ist es auch von Vorteil, wenn auch das schaftseitige Ende des Niets pfeilspitzenförmig zuläuft.

Eine sichere Passung gegen ein Bauteil wird auch dadurch erzielt, dass der Nietkopf als Federteller ausgeführt ist, der so gestaltet und bemessen ist, dass das Verbindungselement gegen das wenigstens eine zwischen dem Nietkopf dem Gegenlager gehaltene Bauteil (VD) vorgespannt werden kann. Damit ist auch bei unterschiedlich tiefen Bauteilen eine rückseitige Befestigung des Verbindungselements 'auf Anschlag' möglich. Je nach Auslegung des Federwegs des Tellers kann dabei auch lediglich eine einzige Kombination von komplementären Rastelementen an dem Nietschaft und der Aufnahme vorgesehen sein.

Ein aus einem Kunststoffmaterial hergestellter Niet ist besonders kostengünstig herzustellen, zB wie bereits erwähnt als Spritzgussteil. Der Niet kann aber auch aus einem Gummimaterial hergestellt sein, was den Vorteil einer schwingungsdämpfenden Lagerung des gehaltenen Bauteils bietet.

Nachfolgend werden bevorzugte Ausgestaltungen von Niet und Bolzen erläutert.

In einer bevorzugten Ausführungsform ist dabei vorgesehen, dass an dem Außenumfang des Bolzens und an dem Innenumfang des Nietschafts einander zugeordnete Rastelemente ausgebildet sind, die in der Sicherungslage des Bolzens in dem Niet in Eingriff gebracht werden, so dass der Bolzen gegen ein Herausrutschen aus dem Niet gehalten ist. Dies erhöht die Zuverlässigkeit der Verbindung, insbesondere bei starker und langanhaltender Schwingungs- bzw Stoßbelastung.

Bevorzugt ist es, wenn auch die Rastelemente zwischen Bolzen und Nietschaft wenigstens einen Vorsprung umfassen, der umlaufend am Innenumfang des Nietschafts ausgebildet ist, und wenigstens eine zugehörige Ausnehmung umfassen, die am Umfang des Bolzens gleichartig umlaufend ausgebildet ist, wobei in der Sicherungslage des Bolzens in dem Niet ein jeweiliger Vorsprung in eine gegenüberliegende Ausnehmung eingreift. Wie schon hinsichtlich des Niets erläutert, lassen sich derartige Rastelemente auch am Bolzen, zB als rotationssymetrisches Kunststoffspritzteil, besonders einfach realisieren.

Wie schon im Zusammenhang mit der Rastverbindung zwischen Niet und Aufnahme angeführt, ist es bei entsprechender Bemessung und Abstimmung der Rastverbindung zwischen Niet und Bolzen nicht nötig, dass diese Rundungen oder Einführschrägen aufweist. Allerdings wird auch das Einführen des Sicherungsbolzens vereinfacht, wenn wenigstens eine der beiden seitlichen Flanken der am Innenumfang des Nietschafts gebildeten Vorsprünge pfeilspitzenförmig, und der am Außenumfang des Bolzens gebildeten Ausnehmungen trichterförmig zuläuft. Dadurch ist auch ein Verhaken des Bolzens in dem Nietschaft ausgeschlossen. Aus den gleichen Gründen ist es bevorzugt, dass auch das einführseitige Ende des Bolzens pfeilspitzenförmig zuläuft.

Alternativ oder zusätzlich zu der Verrastung des Bolzens ist es von Vorteil, wenn der Innendurchmesser des Niets und der Außendurchmesser des Bolzens so gewählt sind, dass zwischen dem eingeführten Bolzen und dem Niet eine Presspassung entsteht, die ein Herausrutschen des Bolzens aus seiner Sicherungslage verhindert. Damit wird auch ohne Verrastung eine ähnlich zuverlässige Verbindung geschaffen, wodurch der Niet und der Bolzen konstruktiv einfacher gestaltet und kostengünstiger hergestellt werden können. Eine Presspassung zwischen Niet und Bolzen kann insbesondere auch bei einem Gumminiet verwendet werden, wodurch eine besonders zuverlässige - und schwingungsdämpfende - Lagerung des gehaltenen Bauteils entsteht. Andererseits wird die Zuverlässigkeit der Verbindung durch eine Kombination von Verrastung und Presspassung weiter erhöht.

Sowohl im Hinblick auf eine potentielle Demontage als auch unter stilistischen Gesichtpunkten ist es bevorzugt, wenn ein Ende des Bolzens als Tellerkappe ausgeführt ist, die in der Sicherungslage des Bolzens in dem Niet formschlüssig gegen dessen Kopf anliegt. Zum einen erscheinen Niet- und Bolzenkopf für den Betrachter als geschlossene Einheit, wodurch die Verbindung auch an sichtbaren Stellen einsetzbar ist. Zum anderen bietet der Bolzenkopf die Möglichkeit, den Bolzen zB durch hebelnden Eingriff zwischen Niet- und Bolzenkopf wieder zu entfernen, und somit die Verbindung zwischen Niet und Gegenstück zu lösen. Dadurch werden trotz der äußerst stabilen Verbindung notwendige Wartungs- oder Reparaturarbeiten leicht ausführbar.

Da der Bolzen bei Anlieferung an die Fertigungslinie leicht verloren gehen könnte, ist es bevorzugt, wenn dieser in einer Transportlage lösbar an dem Niet gehalten ist. Dazu kann der Bolzen teilweise in den Niet eingeführt sein, womit dieser Montageschritt beim Herstellen der Verbindung entfällt. Die Verliersicherheit kann auch dadurch hergestellt werden, indem der Bolzen - in eingeführter oder anderen Lage - an den Niet angespritzt ist.

Im weiteren sind vorteilhafte Ausgestaltungen des Gegenlagers angegeben.

In einer bevorzugten Ausführungsform umfasst das Gegenlager einen länglichen Grundkörper, der Befestigungselemente für wenigstens ein weiteres Bauteil aufweist. Damit kann über das Verbindungselement eine Montagefläche bereitgestellt werden, die gleichzeitig vielerlei Befestigungsmöglichkeiten bietet und die Effizienz der Verbindung erhöht. So ist es insbesondere bevorzugt, wenn die Befestigungselemente Klip- und/oder Schraubaufnahmen umfassen, die keinen weiteren Bauraum erfordern.

Eine rückseitige Befestigung des Niets am Gegenlager ist auch dadurch realisierbar, dass der Grundkörper wenigstens einen Tiefenanschlag aufweist, der so bemessen ist, dass ein Abstand zwischen dem Kopf des in der Befestigungslage gehaltenen Niets und dem Gegenlager an die Tiefe des wenigstens einen dazwischen gehaltenen Bauteils angepasst ist. Durch Herstellung von Grundkörpern mit jeweils unterschiedlichen Tiefenanschlägen kann so eine Normierung getroffen werden, nach der ein jeweils passendes Gegenlager in einer spezifischen Montagesituation wählbar ist. Dadurch ist das Verbindungselement besonders flexibel einsetzbar.

Sowohl eine besonders einfache Montage wie auch ein besonders fester Sitz des Verbindungselements werden dadurch erreicht, dass das Gegenlager wenigstens eine Zentrierschräge zur mittiger Anordnung der Aufnahme in einer Montageöffnung aufweist. Ein Verhaken des Niets in der Öffnung wird somit vermieden, wie auch ein Verrutschen des Verbindungselements in der Öffnung nach der Montage ausgeschlossen ist.

Die Aufgabe der vorliegenden Erfindung wird auch durch ein Verfahren zum Verbinden von Bauteilen an einem Kraftfahrzeug mit dem erfindungsgemäßen Verbindungselement gelöst, bei dem das schaftseitige Ende des Niets durch eine jeweilige Montageöffnung wenigstens eines Bauteils hindurch in die Aufnahme des Gegenlagers eingeführt und verrastet wird, und ein Bolzen in den Niet eingeführt wird, der ein Ausrücken der Verbindung blockiert. Da keine Werkzeuge erforderlich sind, die Verbindung also per Hand herstellbar ist, ist die Montage des Verbindungselements auch bei kleinen Bauräumen möglich.

Dabei wird das Verbindungselement bevorzugt gegen das wenigstens eine Bauteil über einen federtellerartig ausgeführten Nietkopf vorgespannt, was eine sichere Passung, dh rückseitige Befestigung des Niets 'auf Anschlag' zulässt. Indem zudem ein weiteres Bauteil mit dem Grundkörper des Gegenlagers verbunden wird, lässt sich die Effizienz der Verbindung steigern.

Beim Sichern der Verbindung wird schließlich der Bolzen bevorzugt vor der Einführung in den Niet von diesem getrennt. Damit ist insbesondere ein in Transportlage noch nicht eingeführter Bolzen, der zB am Umfang des Nietkopfes verliersicher gehalten ist, bei der Montage des Niets nicht hinderlich.

Wegen des vorteilhaft geringen Bauraumbedarfs und der besonderen Zuverlässigkeit des erfindungsgemäßen Verbindungselements wird dieses bevorzugt zum Befestigen einer Fensterschachtleiste an einer Tür eines Kraftfahrzeugs verwendet. Besonders bevorzugt wird das Verbindungselement dabei in einem Übergriffsbereich der Fensterschachtleiste am freien Ende der Tür angeordnet, um einen festen Halt zu gewährleisten.

Die Erfindung wird im Folgenden anhand von zwei Ausführungsbeispielen näher erläutert, wobei auf die zugehörigen Zeichnungen Bezug genommen wird. Gleiche oder gleichwirkende Teile sind mit gleichen Bezugsziffern versehen. Es zeigen:
- Figur 1A: eine Seitenansicht einer Tür eines Kraftfahrzeugs mit einer Fensterschachtleiste, die im Übergriffsbereich OA nicht befestigt ist;
- Figur 1B: den Bereich OA der Figur 1A in vergrößerter Ansicht, in dem die Fensterschachtleiste von der Tür absteht;
- Figur 2: eine teilweise geschnittene perspektivische Ansicht des erfindungsgemäβen Verbindungselements in Monatgelage an der Tür des Fahrzeugs der Figur 1A;
- Figur 3: eine Draufsicht auf einen horizontalen Schnitt durch das Verbindungselement der Figur 2 in Befestigungslage mit einem teilweise eingeführten, einrastenden Sicherungsbolzen;
- Figur 4: eine Seitenansicht des Niets eines weiteren erfindungsgemäßen Verbindungselements mit einem teilweise eingeführten, einrastenden Sicherungsbolzen;
- Figur 5: eine geschnittene Seitenansicht des Niets der Figur 4, bei dem der Bolzen in Sicherungslage gebracht und verrastet wurde;
- Figur 6: eine perspektivische Ansicht eines Gegenlagers für den Niet der Figuren 4 und 5;
- Figur 7A: eine weitere Seitenansicht der Tür der Figur 1A und 1B mit einer Fensterschachtleiste, die im Übergriffsbereich OA mit einem erfindungsgemäβen Verbindungselement befestigt ist;
- Figur 7B: den Bereich OA der Figur 7A in vergrößerter Ansicht, mit der entfernten Fensterschachtleiste, wobei eine Montageöffnung für das erfindungsgemäße Verbindungselement sichtbar ist, und
- Figur 8: eine perspektivische Ansicht des Niet- und Bolzenkopfs eines erfindungsgemäßen Verbindungselements, das an der Tür der Figuren 1A, 1B, 7A und 7B befestigt ist.

Die Figur 1A zeigt eine Seitenansicht einer (Fahrer)Tür VD (vehicle door) eines Kraftfahrzeugs mit einer Fensterschachtleiste WB (waist belt), die im Übergriffsbereich OA (overlap area) am freien Ende der Tür VD nicht befestigt ist.

Die Figur 1B zeigt den Bereich OA der Figur 1A in vergrößerter Ansicht. In dieser Figur ist erkennbar, dass die Steifigkeit der Leiste WB im Gebrauch des Fahrzeugs nicht ausreicht, um diese im Übergriffsbereich OA an der Außenhaut der Tür VD zu halten. Eine Befestigung ist aber auf Grund des an dieser Stelle besonders beengten Bauraums schlecht möglich, ohne vorgegebene Stylinganforderungen zu verletzen. Diese Situation wird durch die vorgesehene Außendrehung des Türrahmens noch verschärft.

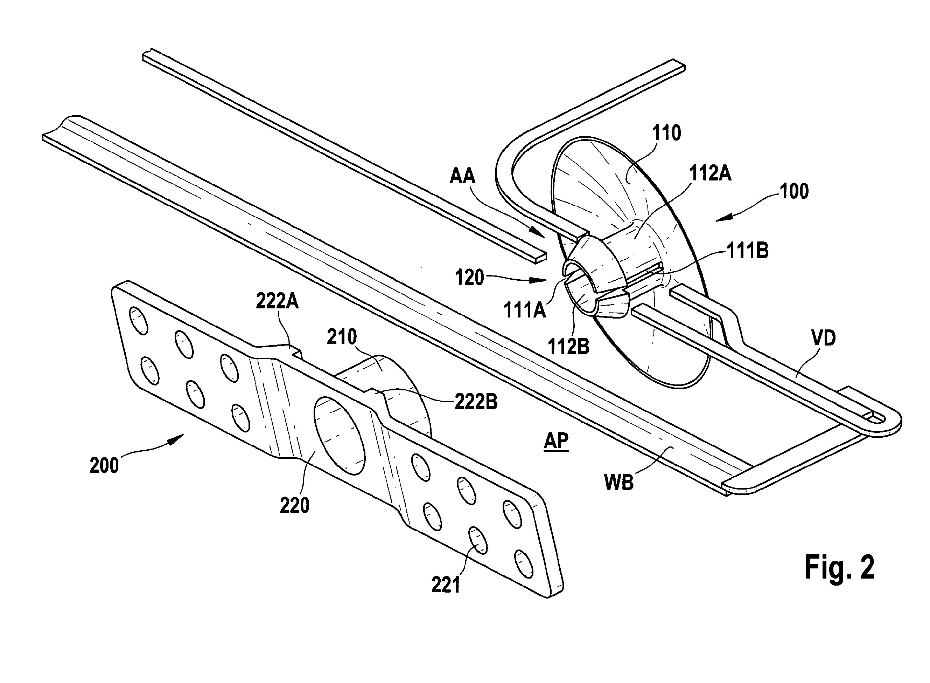

Die Figur 2 zeigt eine teilweise geschnittene perspektivische Ansicht des erfindungsgemäßen Verbindungselements in Monatgelage AP (assembly position) an der Tür VD des Fahrzeugs der Figur 1A, in der sich dessen Niet 100 und dessen Gegenlager 200 gegenüberstehen. Der Niet besteht aus einem federtellerartig ausgebildeten Nietkopf 110, der gegen eine Innenfläche der Tür VD anliegt, und einem Schaft 120, der durch eine Montageöffnung AA (assembly aperture) der Tür VD hindurch gesteckt ist. Das Gegenlager 200 wiederum weist eine rohrförmige Aufnahme 210 auf, in die der Schaft 120 des Niets 100 eingeführt und verrastet wird, und einen länglichen Grundkörper 220 mit Befestigungselementen 221 (aus Übersichtgründen ist nur eines der hier gezeigten Durchgangslöcher beziffert), an dem eine Fensterschachtleiste WB befestigt werden soll. Dies kann zB über entsprechende Schraub- oder Klipverbindungen in den Befestigungselementen 221 geschehen, die hier als einfache Durchgangsbohrungen ausgeführt sind.

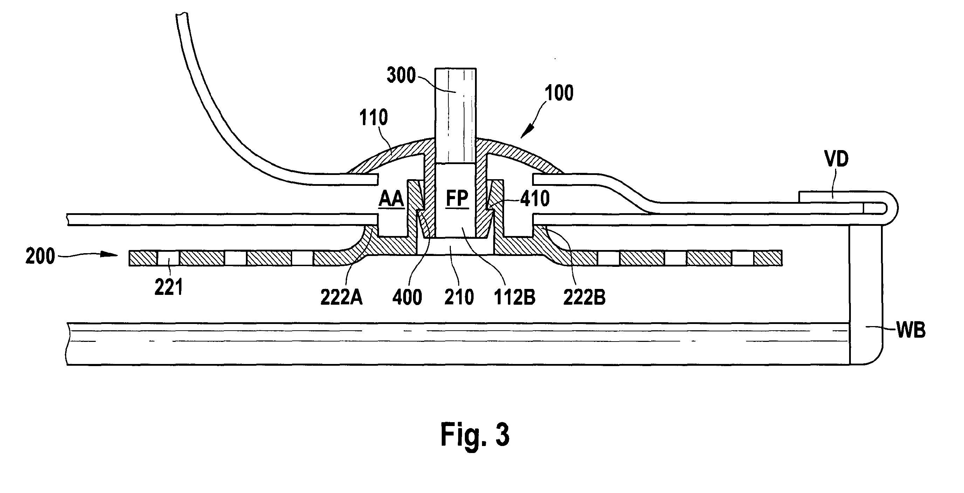

Der Nietschaft 110 ist spreizdübelartig aufgebaut, und weist in dieser Ausführungsform zwei Schlitze 111A, 111B auf, zwischen denen elastisch auslenkbare Zungen 112A, 112B gebildet sind. Am vorderen Umfang des Schafts 120 ist ein in Einführrichtung des Schafts 110 pfeilspitzenförmig zulaufendes Rastelement zu erkennen, über das der Schaft 110 des Niets 120 in der Aufnahme 210 des Gegenlagers 220 verrastet. In der Befestigungsposition FP (fixing position) des Niets 100 am Gegenlager 200, die im Detail in Figur 3 erläutert wird, liegen am Grundkörper 220 des Gegenlagers 200 ausgebildete Tiefenanschläge 222A, 222B von außen gegen die Tür VD an.

Der einfache Aufbau des Verbindungselements lässt eine rasche Montage ohne Werkzeugeinsatz im engen Bauraum des Türendes zu, wobei das Element einen besonders festen Sitz gegen den elastisch einfedernden Nietkopf erreicht. Um eine Anpassung des Elements an unterschiedliche Fixierlängen zu erzielen, können normierte Gegenlager 200 mit unterschiedlich tiefen Anschlägen 222A, 222B und/oder Aufnahmen 210 vorgesehen sein, sowie normierte Niete 100, die unterschiedlich lange Nietschäfte 120 oder Federwege des Nietkopfs 110 aufweisen. Es können auch mehrere über die Länge des Schafts 120 verteilte Rastelemente vorgesehen sein, die in zugehörige Rastelemente der Aufnahme 210 eingreifen, um eine Flexibilität der Verrastung in Tiefenrichtung zu bewirken. Auch lässt sich der Grundkörper 220 des Gegenlagers 200 auf ein gewünschtes Befestigungsszenario anpassen, zB wenn kein längliches, sondern ein eher rundes Bauteil gehalten werden soll.

Die Figur 3 zeigt eine Draufsicht auf einen horizontalen Schnitt durch das Verbindungselement der Figur 2 in Befestigungslage FP mit einem teilweise eingeführten, einrastenden Sicherungsbolzen 300 zum Verdeutlichen des Rast- und Sicherungsmechanismus. Das schon in Figur 2 erkennbare Rastelement ist als ein am Außenumfang des Nietschafts 120 umlaufender, in Einführrichtung pfeilspitzenförmig zulaufender Vorsprung 400 ausgebildet. In Befestigungslage FP des Niets 100 am Gegenlager 200 liegt dieser gegen einen zugehörigen, am Innenumfang der Aufnahme 210 umlaufenden, in Einführrichtung trichterförmig zulaufenden Vorsprung 410 an. Beim Einführen des Nietschafts werden dabei die Zungen 112A, 112B zunächst elastisch aufeinander zu bewegt und rücken schließlich hinter dem und gegen den Vorsprung 410 elastisch rückfedernd ein.

In dieser Lage steht die Verbindung unter Vorspannung und weist einen besonders festen Sitz in der Montageöffnung AA auf, bei dem der tellerfederartige Nietkopf 110 elastisch eingefedert gegen die Innenhaut der Tür VD anliegt, und somit die Tiefenanschläge 222A, 222B des Gegenlagers 200 gegen die Außenhaut der Tür VD zieht. Da die Aufnahme 210 des Gegenlagers 200 dem Niet 100 zugewandt ausgebildet ist, erfordern die ineinandergreifenden Elemente der Rastverbindung, nämlich Aufnahme 210 und Nietschaft 120, sehr wenig Platz, so dass das Verbindungselement auch in engen Bauräumen verwendbar ist.

Die Verbindung zwischen Niet 100 und Gegenlager 200 ist aber auch besonders sicher, da der Bolzen 300 - wenn in den rohrförmigen Niet eingeführt - ein Ausrücken der Rastverbindung, also der Vorsprünge 400 und 410 unmöglich macht. Der Bolzen 300 selbst ist in diesem Ausführungsbeispiel mit Presspassung zum Niet versehen, so dass dieser auch bei Vibrations- oder Stoßbelastung nicht herausrutschen kann. Im einfachsten Fall kann die Fensterschachtleiste WB an den Befestigungselementen 221 eingeklipst werden, wobei die Klipse den länglichen Grundkörper 220 hintergreift, wozu dieser von den Außenhaut der Tür abgesetzt ausgebildet ist.

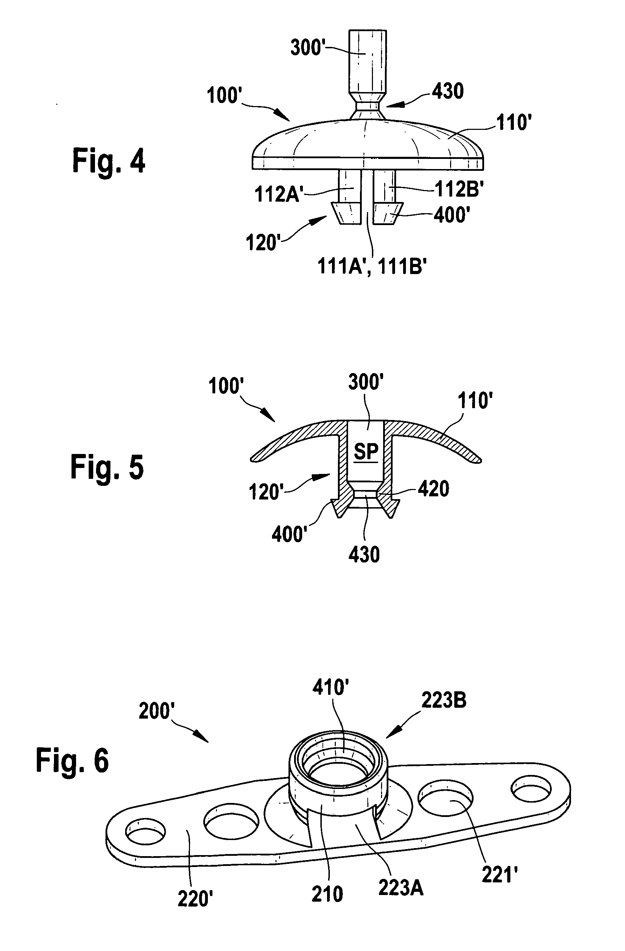

Die Figur 4 zeigt eine Seitenansicht des Niets 100' eines weiteren erfindungsgemäßen Verbindungselements mit einem teilweise eingeführten, einrastenden Sicherungsbolzen 300'. Der grundsätzliche Aufbau des Niets 100' ist dabei ähnlich dem des ersten Ausführungsbeispiels und weist einen tellerfederartigen Nietkopf 110' und einen spreizdübelartigen Nietschaft 120' mit Schlitzen 111A', 111B' sowie elastisch auslenkbaren Zungen 112A', 112B' auf. Am freien Ende des Nietschafts 120' ist wieder ein Rastelement in Form eines am Außenumfang umlaufenden, in Einführrichtung pfeilspitzenförmig zulaufenden Vorsprungs 400' zuerkennen.

Im Gegensatz zum vorstehenden Ausführungsbeispiel ist der Bolzen 300' allerdings nicht mehr mit Presspassung auf den rohrförmigen Niet ausgeführt, sonder weist zu seiner Sicherung eine am Außenumfang umlaufende Ausnehmung 430 auf, die in dem Nietschaft 120' verrastet. Die Sicherungslage SP (securing position) des Bolzens 300' ist im Detail in Figur 5 gezeigt.

Die Figur 5 zeigt eine geschnittene Seitenansicht des Niets 100' der Figur 4, bei dem der Bolzen 300' in Sicherungslage SP gebracht und verrastet wurde. Dabei greift ein am Innenumfang des Nietschafts 120' umlaufend ausgebildeter Vorsprung 420 in die Ausnehmung 430 ein, womit der Bolzen 300' gegen ein unbeabsichtigten Herausrutschen, und gleichzeitig der Vorsprung 400' gegen ein Ausrücken aus der Rastung gesichert ist. Ein Vorteil des rastenden Bolzens 300' gegenüber dem Pressbolzen 300 besteht darin, dass eine definierte Sicherungslage SP des Bolzens 300' bei der Montage der Verbindung erzielt wird. Damit werden zu wenig oder zu tief eingesteckte Bolzen ausgeschlossen und zudem eine kantenfreie Nietkopfoberfläche sichergestellt, was aus stilistischen Gründen von Belang ist.

Die Demontage beider bislang vorgestellter Verbindungen kann durch Aufbohren der Sicherungsbolzens 300, 300' geschehen, womit sich die Niete 100, 100' aus ihren jeweiligen Aufnahmen 210, 210' (Aufnahme 210' in Figur 6 dargestellt) hebeln ließen. Die Bolzen 300, 300' können aber auch mit Köpfen versehen sein, die formschlüssig am jeweiligen Nietkopf 110, 110' anliegen, und über die der Bolzen mit einem Werkzeug abziehbar wäre.

Die Figur 6 zeigt eine perspektivische Ansicht eines Gegenlagers 200' für den Niet 100' der Figuren 4 und 5. Dieses besteht ähnlich wie das Gegenlager 200 des ersten Ausführungsbeispiels aus einem länglichen Grundkörper 220' und einer rohrförmigen Aufnahme 210' für den Nietschaft 120'. Umlaufend am Innenumfang der Aufnahme 210' ist ein Rastelement sichtbar, das aus einem trichterförmig zulaufenden Vorsprung 410' besteht, hinter dem und gegen den der Vorsprung 400' an den elastisch rückfedernden Zungen 112A', 112B' des Nietschafts 120' anliegt. Um das Einführen der Aufnahme in eine Montageöffnung AA an einem Bauteil zu erleichtern und einen mittigen Sitz zu gewährleisten, sind an dem Grundkörper 220' des Gegenlagers 200' Zentrierschrägen 223A, 223B (nicht sichtbar) vorgesehen. Der Grundkörper 220' weist zudem Befestigungselemente 221' auf, die als Durchgangsbohrungen unterschiedlich großer Durchmesser ausgelegt sind. Dadurch lassen sich mit ein und demselben Gegenlager jeweils auf ein gewünschtes Bauteil abgestimmte, unterschiedlich starke Klipverbindungen herstellen.

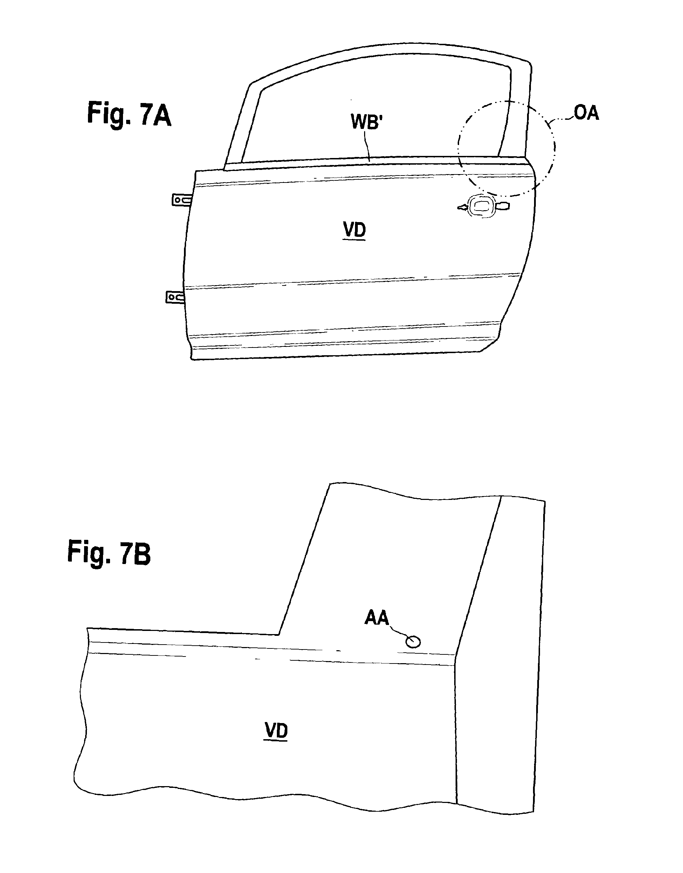

Die Figur 7A zeigt eine weitere Seitenansicht der Tür der Figur 1A und 1B mit einer Fensterschachtleiste WB', die im Übergriffsbereich OA mit einem erfindungsgemäßen Verbindungselement befestigt ist.

Die Figur 7B zeigt den Bereich OA der Figur 7A in vergrößerter Ansicht, mit der entfernten Leiste WB', wobei eine Montageöffnung AA für das erfindungsgemäße Verbindungselement sichtbar ist. In diese Montageöffnung wird der Niet 100, 100' bzw das Gegenlager 200, 200' gemäß einer der Ausführungsformen eingeführt und miteinander verrastet, um an dessen jeweiligen Grundkörper 220, 220' die schließlich den türendseitigen Bereich der Leiste WB' einzuklipsen. Eine Ablösung der Leiste WB' durch Benutzung des Fahrzeugs bzw der Tür ist auf Grund dieser Anbringung nicht mehr möglich. Ein entsprechendes Bohrloch ist sowohl nachträglich leicht an der Tür anzubringen, kann aber auch schon im Rohteil berücksichtigt sein. Die Montage erfordert keinerlei zusätzliches Werkzeug und ist einfach und schnell, somit kostengünstig durch zuführen.

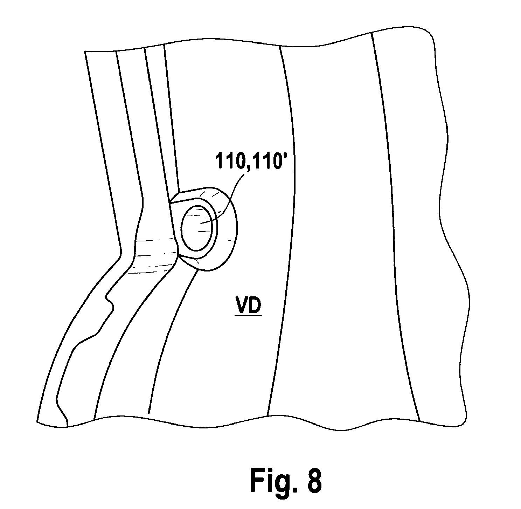

Die Figur 8 zeigt eine perspektivische Ansicht des Niet- und Bolzenkopfs eines erfindungsgemäßen Verbindungselements, das an der Tür der Figuren 1A, 1B, 7A und 7B befestigt ist. Durch die kantenfreie Aufnahme des Sicherungsbolzens im Niet 110, 110' ist eine stilistisch akzeptable Integration des Elements an der Tür VD möglich, obwohl der Bauraum äußerst eingeschränkt ist.

Es bleibt darauf hinzuweisen, dass das erfindungsgemäße Verbindungselement nicht nur auf die hier beschriebene Anwendung einer Fensterschachtleiste beschränkt ist. Das Element kann grundsätzlich mit den beschriebenen Vorteilen eingesetzt werden, wo zwischen Nietkopf 110, 110' und Grundkörper 220, 220' zB zwei Bauteile gegeneinander gehalten und weitere Bauteile am Grundkörper 220, 220' angeschlossen werden sollen. Das Element muss dabei auch nicht unbedingt aus einem Kunststoffmaterial bestehen, sondern kann auch aus einem Metall hergestellt sein, das eine angemessene Stabilität gewährt. In stark schwingungsbelasteten Bereichen des Fahrzeugs kann wenigstens der Niet 100, 100' aus einem Gummimaterial bestehen, um eine entsprechende Dämpfung gegen die Bauteile zu erzielen.

In jedem Fall ermöglicht das erfindungsgemäße Verbindungselement eine einfache, schnelle Montage unter sehr begrenzten Platzbedingungen. Es weist einen festen Sitz und einen äußerst zuverlässigen Halt auf und ist darüber hinaus konstruktiv einfach aufgebaut und kostengünstig herstellbar.

### Bezugszeichenliste

- 100; 100': Niet
- 110; 110': Kopf des Niets 100; 100'
- 120; 120': Schaft des Niets 100; 100'
- 111A, 111B: Schlitze des Niets 100
- 111A', 111B': Schlitze des Niets 100'
- 112A, 112B: Zungen des Niets 100
- 112A', 112B': Zungen des Niets 100'
- 200; 200': Gegenlager des Niets 100; 100'
- 210; 210': Aufnahme des Gegenlagers 200; 200'
- 220; 220': Grundkörper des Gegenlagers 210; 210'
- 221; 221': Befestigungselemente des Gegenlagers 210; 210'
- 222A, 222B: Tiefenanschlag des Gegenlagers 220'
- 223A, 223B: Zentrierschrägen des Gegenlagers 200'
- 300; 300': Bolzen des Niets 100; 100'
- 400; 400': Außenvorsprung an dem Nietschaft 120; 120'
- 410; 410': Innenvorsprung an der Aufnahme 121; 121'
- 420: Innenvorsprung an dem Nietschaft 120'
- 430: Ausnehmung am Bolzen 300'
- AA: Montageöffnung
- FP: Befestigungslage des Niets 100
- AP: Montagelage von Niet 100 und Gegenlager 200
- OA: Übergriffsbereich
- SP: Sicherungslage des Bolzens 140
- VD: Tür
- WB: Fensterschachtleiste aus dem Stand der Technik
- WB': Erfindungsgemäße Fensterschachtleiste

## Patentansprüche

1. Verbindungselement für Bauteile (VD, WB) eines Kraftfahrzeugs, umfassend einen rohrförmigen Niet (100; 100'), mit einem Nietkopf (110; 110') und einem Schaft (120; 120'), wobei der Schaft wenigstens zwei längsseitige Schlitze (111A, 111B; 111A', 111B') aufweist, zwischen denen elastisch rückfedernd auslenkbare Zungen (112A, 112B; 112A', 112B') gebildet sind, und umfassend ein Gegenlager (200; 200') mit einer rohrförmigen Aufnahme (210; 210'), in die der Schaft des Niets zum Halten wenigstens eines Bauteils (VD) zwischen Nietkopf und Gegenlager einführbar ist, wobei an dem Außenumfang des Schafts und an dem Innenumfang der Aufnahme einander zugeordnete Rastelemente ausgebildet sind, die in einer Befestigungslage (FP) des Niets in der Aufnahme in Eingriff gebracht werden, so dass der Niet gegen ein Herausrutschen aus der Aufnahme gehalten ist, und umfassend einen Bolzen (300; 300'), der in den rohrförmigen Niet einführbar ist, und der in einer Sicherungslage (PS) in dem Niet (100) eine Auslenkung der Zungen blockiert, so dass ein Ausrücken der Rastelemente verhindert wird.

2. Verbindungselement nach Anspruch 1, bei dem die Rastelemente wenigstens einen Vorsprung (400, 410) umfassen, der umlaufend am Außenumfang des Nietschafts (120; 120') oder am Innenumfang der Aufnahme (121; 121') ausgebildet ist, und wenigstens einen zugehörigen Vorsprung (400', 410') oder eine zugehörige Ausnehmung umfassen, der oder die am jeweils gegenüberliegenden Umfang gleichartig umlaufend ausgebildet ist, wobei in der Befestigungslage (FP) des Niets (100; 100') ein jeweiliger Vorsprung (400; 410) gegen einen gegenüberliegenden Vorsprung (400'; 410') anliegt oder in eine gegenüberliegende Ausnehmung eingreift.

3. Verbindungselement nach Anspruch 2, bei dem wenigstens eine der beiden seitlichen Flanken der am Innenumfang der Aufnahme (210; 210') gebildeten Vorsprünge (410, 410') oder Ausnehmungen trichterförmig, und der am Außenumfang des Nietschafts (120; 120') gebildeten Vorsprünge (400, 400') oder Ausnehmungen pfeilspitzenförmig zuläuft.

4. Verbindungselement nach einem der vorstehenden Ansprüche, bei dem das schaftseitige Ende des Niets (100; 100') pfeilspitzenförmig zuläuft.

5. Verbindungselement nach einem der vorstehenden Ansprüche, bei dem der Nietkopf (110; 110') als Federteller ausgeführt ist, der so gestaltet und bemessen ist, dass das Verbindungselement gegen das wenigstens eine zwischen dem Nietkopf dem Gegenlager (200; 200') gehaltene Bauteil (VD) vorgespannt werden kann.

6. Verbindungselement nach einem der vorstehenden Ansprüche, bei dem der Niet (100; 100') aus einem Kunststoff- oder einem Gummimaterial hergestellt ist.

7. Verbindungselement nach einem der vorstehenden Ansprüche, bei dem an dem Außenumfang des Bolzens (300') und an dem Innenumfang des Nietschafts (120') einander zugeordnete Rastelemente ausgebildet sind, die in der Sicherungslage (SP) des Bolzens in dem Niet (100') in Eingriff gebracht werden, so dass der Bolzen gegen ein Herausrutschen aus dem Niet gehalten ist.

8. Verbindungselement nach Anspruch 7, bei dem die Rastelemente wenigstens einen Vorsprung (420) umfassen, der umlaufend am Innenumfang des Nietschafts (120') ausgebildet ist, und wenigstens eine zugehörige Ausnehmung (430) umfassen, die am Umfang des Bolzens (300') gleichartig umlaufend ausgebildet ist, wobei in der Sicherungslage des Bolzens (300') in dem Niet (100') ein jeweiliger Vorsprung (420) in eine gegenüberliegende Ausnehmung (430) eingreift.

9. Verbindungselement nach Anspruch 8, bei dem wenigstens eine der beiden seitlichen Flanken der am Innenumfang des Nietschafts (120') gebildeten Vorsprünge (420) pfeilspitzenförmig, und der am Außenumfang des Bolzens (300') gebildeten Ausnehmungen (430) trichterförmig zuläuft.

10. Verbindungselement nach einem der vorstehenden Ansprüche, bei dem das einführseitige Ende des Bolzens (300; 300') pfeilspitzenförmig zuläuft.

11. Verbindungselement nach einem der vorstehenden Ansprüche, bei dem der Innendurchmesser des Niets (100; 100') und der Außendurchmesser des Bolzens (300; 300') so gewählt sind, dass zwischen dem eingeführten Bolzen und dem Niet eine Presspassung entsteht, die ein Herausrutschen des Bolzens aus seiner Sicherungslage (SP) verhindert.

12. Verbindungselement nach einem der vorstehenden Ansprüche, bei dem ein Ende des Bolzens (300; 300') als Tellerkappe ausgeführt ist, die in der Sicherungslage (SP) des Bolzens in dem Niet (100; 100') formschlüssig gegen dessen Kopf (110; 110') anliegt.

13. Verbindungselement nach einem der vorstehenden Ansprüche, bei dem der Bolzen (300; 300') in einer Transportlage lösbar an dem Niet (100; 100') gehalten ist.

14. Verbindungselement nach Anspruch 13, bei dem der Bolzen (300; 300') teilweise in den Niet (100; 100') eingeführt ist.

15. Verbindungselement nach Anspruch 13 oder 14, bei dem der Bolzen (300; 300') an den Niet (100; 100') angespritzt ist.

16. Verbindungselement nach einem der vorstehenden Ansprüche, bei dem das Gegenlager (200; 200') einen länglichen Grundkörper (220; 220') umfasst, der Befestigungselemente (221; 221') für wenigstens ein weiteres Bauteil (WB) aufweist.

17. Verbindungselement nach Anspruch 16, bei dem die Befestigungselemente (221; 221') Klip- und/oder Schraubaufnahmen umfassen.

18. Verbindungselement nach Anspruch 16 oder 17, bei dem der Grundkörper (220) wenigstens einen Tiefenanschlag (222A, 222B) aufweist, der so bemessen ist, dass ein Abstand zwischen dem Kopf (110) des in der Befestigungslage (FP) gehaltenen Niets (100) und dem Gegenlager (200) an die Tiefe des wenigstens einen dazwischen gehaltenen Bauteils (VD) angepasst ist.

19. Verbindungselement nach einem der vorstehenden Ansprüche, bei dem das Gegenlager (200') wenigstens eine Zentrierschräge (223A, 223B) zur mittiger Anordnung der Aufnahme (210') in einer Montageöffnung aufweist.

20. Verfahren zum Verbinden von Bauteilen (VD, WB) an einem Kraftfahrzeug mit einem Verbindungselement nach einem der vorstehenden Ansprüche, bei dem das schaftseitige Ende des Niets (100; 100') durch eine jeweilige Montageöffnung (AA) wenigstens eines Bauteils (VD) hindurch in die Aufnahme (210; 210') des Gegenlagers (200; 200') eingeführt und verrastet wird, und ein Bolzen (300; 300') in den Niet eingeführt wird, der ein Ausrücken der Verbindung blockiert.

21. Verfahren nach Anspruch 20, bei dem das Verbindungselement gegen das wenigstens eine Bauteil (VD) über einen federtellerartig ausgeführten Nietkopf (110; 110') vorgespannt wird.

22. Verfahren nach Anspruch 20 oder 21, bei dem ein weiteres Bauteil (WB) mit dem Grundkörper (220; 220') des Gegenlagers (200; 200') verbunden wird.

23. Verfahren nach einem der Ansprüche 20 bis 22, bei dem der Bolzen (300; 300') vor der Einführung in den Niet (100; 100') von diesem getrennt wird.

24. Verwendung eines Verbindungselements nach einem der vorstehende Ansprüche zum Befestigen einer Fensterschachtleiste (WB) an einer Tür (VD) eines Kraftfahrzeugs.

25. Verwendung eines Verbindungselements nach Anspruch 24, bei der das Verbindungselement in einem Übergriffsbereich (OA) der Fensterschachtleiste (WB) am freien Ende der Tür (VD) angeordnet ist.
